(19) Europäisches Patentamt
European Patent Office
Office européen des brevets

(11) EP 1 367 006 A1

(12) EUROPEAN PATENT APPLICATION
published in accordance with Art. 158(3) EPC

(43) Date of publication:
03.12.2003 Bulletin 2003/49

(21) Application number: 01965607.3

(22) Date of filing: 13.09.2001

(51) Int Cl.[7]: **B65D 81/24**, C08L 23/28

(86) International application number:
PCT/JP01/07940

(87) International publication number:
WO 02/022465 (21.03.2002 Gazette 2002/12)

(84) Designated Contracting States:
AT BE CH CY DE DK ES FI FR GB GR IE IT LI LU MC NL PT SE TR
Designated Extension States:
AL LT LV MK RO SI

(30) Priority: 14.09.2000 JP 2000279043
13.09.2001 JP 2001277463

(71) Applicant: NIPPON PAPER INDUSTRIES CO., LTD.
Kita-ku, Tokyo 114-0002 (JP)

(72) Inventors:
- URATA, Keiji, Nippon Paper Industries Co., Ltd.
Tokyo 100-0006 (JP)
- MITSUI, Hideaki, Nippon Paper Ind. Co. Ltd.
Iwkuni-shi, Yamaguchi 740-0003 (JP)
- HIROSE, Takayuki,
Nippon Paper Industries Co. Ltd.
Iwakuni-shi, Yamaguchi 740-0003 (JP)

(74) Representative:
TER MEER STEINMEISTER & PARTNER GbR
Mauerkircherstrasse 45
81679 München (DE)

# (54) PACKAGE OF SOLID CHLORINATED POLYOLEFIN MODIFIED WITH CARBOXYLIC ACID ANHYDRIDE AND METHOD OF STORING THE SOLID

(57) The invention provides a package of solid material of carboxylic anhydride-modified chlorinated polyolefin to be used for a binder resin for paint or primer that aims at the protection or beautiful ornament of polyolefinic resins, capable of suppressing the changes in physical properties after storing for a long term, and a method of preserving said solid material.

A package of solid material of carboxylic anhydride-modified chlorinated polyolefin, comprising said solid material of carboxylic anhydride-modified chlorinated polyolefin wrapped with a film with the value of water vapor transmission rate measured according to ASTM D895 ("Standard Test Method Water Vapor Permeability of Packages") (measuring conditions: temperature 37.8±1.1°C, relative humidity 90±2%) of 1.5g/$m^2$·24hr or lower, and a method of preserving said solid material.

EP 1 367 006 A1

## Description

### Technical field

The present invention relates to a package of solid material of carboxylic anhydride-modified chlorinated polyolefin to be used as a binder resin for paint or primer that aims at the protection or beautiful ornament of polyolefinic resins, for example, polypropylene, polyethylene, ethylene-propylene copolymer, ethylene-propylene-diene copolymer, etc., and a method of preserving said solid material.

### Background technologies

Because of low price and many excellent properties such as moldability, chemical resistance, heat resistance, water resistance and good electrical characteristics, polyolefinic resins are used widely as industrial materials and one of materials that the growth of demand is most expected in future.

Different from synthetic resins with polarity such as polyurethane resin, polyamide resin, acrylic resin and polyester resin, however, polyolefinic resin is nonpolar and crystalline, hence it has drawbacks of difficult paintability and adhesion.

For the paintability and adhesion of polyolefinic resin with such difficulty in adherence, chlorinated polyolefin with strong adherence to polyolefinic resin is used in many times so far as a binder resin, and, above all, low-chlorinated polypropylene or low-chlorinated propylene-$\alpha$-olefin copolymer with chlorine content of 5 to 50% by weight graft copolymerized with carboxylic anhydride (carboxylic anhydride-modified chlorinated polyolefin) is proposed as a painting primer or coating binder resin for polyolefinic moldings in Japanese Patent Publication Nos. Sho 63-50381 and Sho 63-36624, Japanese Unexamined Patent Publication Nos. Sho 57-36128, Sho 59-166534 and Hei 11-181193, Japanese Patent Application No. Hei 11-255662, etc.

Usually, the carboxylic anhydride-modified chlorinated polyolefin is stored or transported by packaging in an appropriate bag in the shape of strand-cut good or pellet good. However, the carboxylic anhydride causes ring opening with the moisture in atmosphere during storage thereof, resulting in increased solution viscosity when dissolving into solvents such as toluene and xylene, which differs significantly from the solution viscosity before ring opening of carboxylic anhydride, hence it could not necessarily be said that it was suitable as abinder resin after storage for a long term.

Furthermore, also in the aspect of physical properties, it was difficult to avoid a decrease in part of the physical properties by ring opening of carboxylic anhydride. For example, the gasohol resistance being a criterion of solvent resistance, that is, the stability of coated film against gasoline/alcohol mixed solution (gasohol) with lower alcohol such as methanol or ethanol added to regular gasoline decreased clearly with ring opening of carboxylic anhydride, thus causing the swelling and peeling-off of coated film.

For suppressing the ring opening of carboxylic anhydride with the moisture in atmosphere, commonly, a method of tightly sealing and keeping in a bag of kraft paper or bag of plastics represented by polyethylene and polypropylene is adopted, but, when keeping for a long term, carboxylic anhydride gradually caused the ring-opening reaction with water to bring about decreased quality. In particular, when exporting the solid material of carboxylic anhydride-modified chlorinated polyolefin, it is preserved for a long term in ship at high temperature and high humidity, hence such deterioration was a significant obstruction for stabilizing the quality.

The purpose of the invention is to provide a package and method of preserving said solid material that solve the problem aforementioned.

### Disclosure of the invention

The invention relates to a package of solid material of carboxylic anhydride-modified chlorinated polyolefin, wherein said solid material is wrapped with a film with the value of water vapor transmission rate measured according to ASTM D895 of $1.5 g/m^2 \cdot 24hr$ or lower.

Furthermore, the invention relates to a method of preserving said solid material that allows to stabilize the quality without moisture sorption upon storing and preserving said solid material.

The carboxylic anhydride-modified chlorinated polyolefin concerned in the invention can be produced easily by the publicly known methods. For example, as the methods of graft polymerizing unsaturated carboxylic acid monomers of carboxylic anhydrides such as maleic anhydride and itaconic anhydride onto polyolefin, 1) unsaturated carboxylic acid monomer is added to molten polyolefin resin, employing reactor, Banbury mixer, kneader, extruder, etc., to conduct the polymerization reaction in the presence of radical generator, 2) polyolefin resin is dissolved into solvents such as toluene and xylene under heating and unsaturated carboxylic acid monomer is added to conduct the polymerization reaction in the presence of radical generator, and the like are known. Moreover, to these carboxylic anhydride-modified chlorinated polyolefins, stabilizers that use compounds with epoxy group, etc. are added usually.

Besides, the polyolefin resin that becomes raw material is not particularly restricted, if it is one used usually. If need be, it is offered after viscosity reduction or degradation by heat decomposition.

The chlorination of polyolefin graft copolymerized with carboxylic anhydride can be achieved by dissolving it into a solvent such as carbon tetrachloride or chloroform and blowing-in chlorine gas within a temperature range from 50 to 120°C under applied pressure or ambient pressure in the presence of radical-generating catalyst or under irradiation of ultraviolet rays to react.

Moreover, it can also be obtained by chlorinating a terpolymer copolymerized unsaturated carboxylic acid monomer, unsaturated vinyl ester monomer and ethylene by publicly known methods such as high-pressure radical polymerization process, solution polymerization process and emulsion polymerization process, by the method as described above.

Besides, the grafting rate of carboxylic anhydride and the chlorine content of carboxylic anhydride-modified chlorinated polyolefin are not particularly restricted.

The solidification of carboxylic anhydride-modified chlorinated polyolefin can be accomplished by distilling-off the solvent for chlorinating reaction such as carbon tetrachloride or chloroform under reduced pressure after completion of the chlorinating reaction to obtain concentrated reaction liquor, by adding stabilizer thereto and then by drying with drum dryer. Moreover, it can also be accomplished by completely removing the reaction solvent with extruder with vent port installed for distilling-off the reaction solvent under reduced pressure in place of drum dryer, by extruding the solid material of chlorinated polyolefin composition in the shape of strand and by pelletizing with cutter under water or water-cooling type pelletizer. In the invention, the solid material means one with remaining solvent level of 3% by weight or lower.

The film to be used in the invention is required to have the value of water vapor transmission rate measured according to ASTM D895 ( "Standard Test Method Water Vapor Permeability of Packages" ) (measuring conditions: temperature 37.8 ± 1.1°C, relative humidity 90 ± 2%) of 1.5g/$m^2$ · 24hr or lower. If exceeding 1.5g/$m^2$ · 24hr, then the solid material of carboxylic anhydride-modified chlorinated polyolefin becomes unpreferable in a point that it absorbs moisture and the carboxylic anhydride causes ring opening over the time, resulting in increased solution viscosity and further decreased gasohol resistance.

The film to be used in the invention is produced from films of polypropylene (hereinafter referred to as PP), high-density polyethylene (hereinafter referred to as HDPE), low-density polyethylene (hereinafter referred to as LDPE), straight chain low-density polyethylene (hereinafter referred to as LLDPE), polyamide (hereinafter referred to as PA), poly(ethylene terephthalate) (hereinafter referred to as PET) and aluminum foil (hereinafter referred to as Al), paper, etc. Industrially, it is preferable to use as a composite film by compositing these. Also, multiply packaging with these films can be used, making the water vapor transmission rate 1.5g/$m^2$ · 24hr or lower.

Preferable one among these composite films is a composite film with Al placed at center and other plastic films disposed on both sides. Moreover, since the film is closed tightly by heat seal, it is preferable to use polyethylenic film such as LLDPE or LDPE for inside film.

For the film of the invention, one produced by any method such as coating process, lamination process or coextrusion process can be used.

The package of solid material of carboxylic anhydride-modified chlorinated polyolefin in the invention indicates one with said solid material wrapped with the film aforementioned. It is only necessary that the whole of said solid material is wrapped with said film, and the packaging form of film is not particularly restricted. Industrially, bag form is preferable, but even box form is unproblematic. Moreover, it is preferable for putting the invention into practice to replace the inside of package with dried air with the moisture removed or inert gas such as nitrogen, or to install a dryer such as anhydrous calcium chloride or drying silica gel in said package body.

Best embodiment to put the invention into practice

In the invention, the mechanism that the viscosity of carboxylic anhydride-modified chlorinated polyolefin is affected by moisture is presumed due to following reaction.

(Chemical formula 1)

Reaction between maleic anhydride-modified chlorinated polyolefin and water

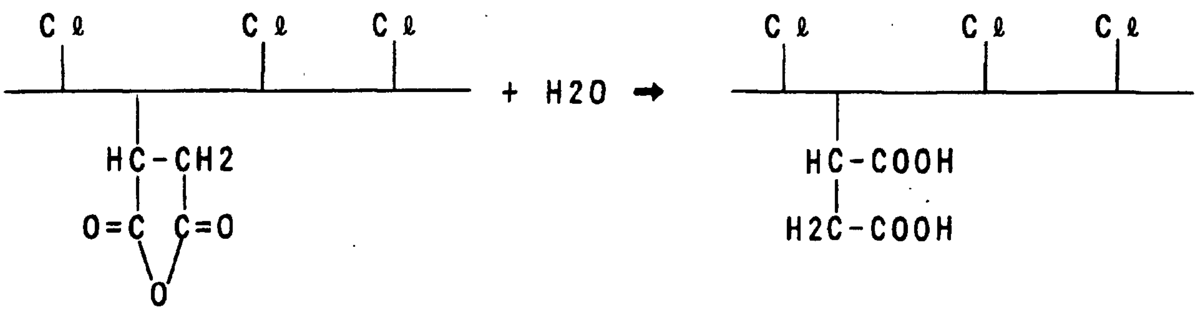

(Maleic anhydride-modified chlorinated polyolefin)

(Chemical formula 2)

Reaction between maleic anhydride-modified chlorinated polyolefin, epoxy compound and water (formation of half ester)

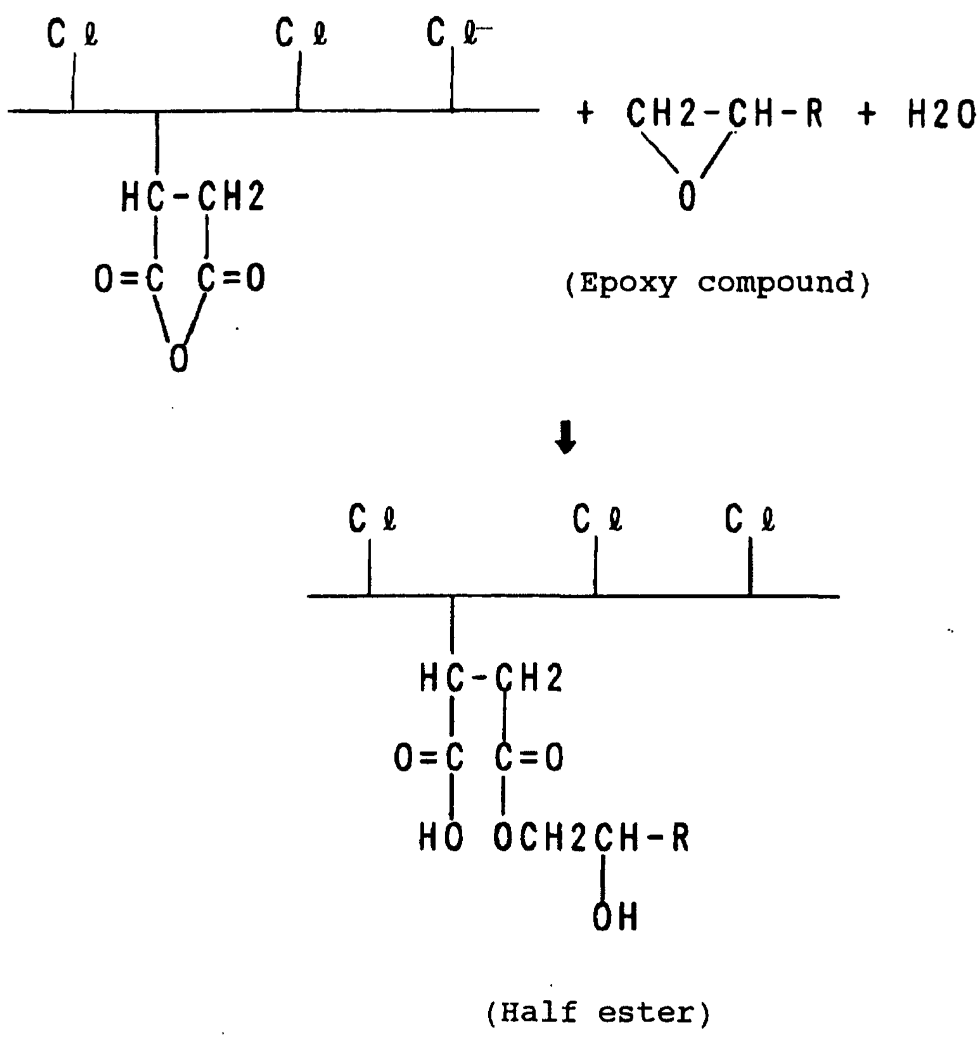

(Chemical formula 3)

Hydrogen bond

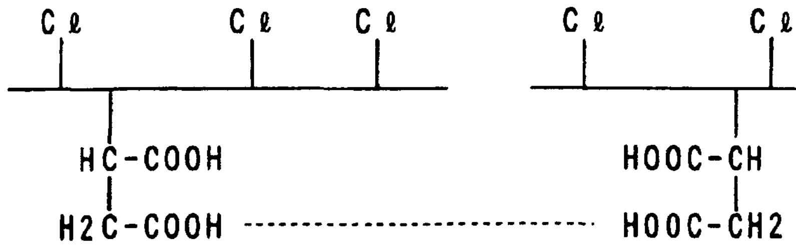

(Dotted line denotes hydrogen bond)

Namely, as in Chemical formula 1 and Chemical formula 2, by reacting maleic anhydride-modified chlorinated polyolefin with moisture in atmosphere or epoxy compound being a stabilizer, the carboxylic anhydride causes ring opening to produce carboxylic acid. If carboxylic acid is produced, then hydrogen bond is formed between molecules as in Chemical formula 3, thereby increasing the viscosity of solution over the time.

In the invention, the moisture in atmosphere is intercepted by using particular film and the ring-opening reaction of carboxylic anhydride is suppressed to make the production of carboxylic acid difficult, hence it becomes possible not to cause the viscosity increase due to hydrogen bond and to constantly keep the solution viscosity.

Moreover, although the mechanism that the gasohol resistance of carboxylic anhydride-modified chlorinated polyolefin is stabilized according to the invention is not clear, it is considered that the state of acid anhydride acts more advantageously on the miscibility and adherence. It is considered therefore that the film used in the invention intercepts the water in atmosphere, suppresses the ring-opening reaction of maleic anhydride and makes the production of carboxylic acid difficult, thereby the adherence between primer comprising carboxylic anhydride-modified chlorinated polyolefin and upper paint is maintained and the gasohol resistance is stabilized.

<Example>

In following, the invention will be illustrated concretely based on examples, but the invention is not confined thereto.

[Producing example 1]

In a three-neck flask attached with stirrer, dropping funnel and cooling pipe for refluxing monomer, 5kg of crystalline polypropylene with weight average molecular weight of 50,000 were placed and molten completely in an oil bath kept constantly at 180°C. After nitrogen replacement in flask was performed for about 10 minutes, 200g of maleic anhydride were put over about 5 minutes while stirring, and then a solution dissolved 20g of di-tert-butyl peroxide into 50ml of heptane was put over about 30 minutes from dropping funnel. At this time, the inside of system was kept at 180°C. After continued the reaction further for 1 hour, unreacted maleic anhydride was removed over about 30 minutes while reducing the pressure in flask with aspirator.

Next, 3kg of this product were put in a glass-lined reactor, 50L of chloroform were added, and, after dissolved sufficiently at a temperature of 110°C under a pressure of 3kg/$cm^2$, chlorine gas was blown-in from the bottom of reactor while irradiating ultraviolet rays to conduct the chlorinating reaction. After reacted to target degree of chlorination, chloroform being a reaction solvent was concentrated with evaporator under reduced pressure, and tert-butylphenyl glycidyl ether was added in amount of 4% by weight based on solids as a stabilizer. Then this was dried up under reduced pressure and further vacuum drying was performed to obtain solid material of maleic anhydride-modified chlorinated polypropylene with amount of maleic anhydride of 2.4% by weight and chlorine content of 22% by weight.

[Producing example 2]

In a three-neck flask attached with stirrer, dropping funnel and cooling pipe for refluxing monomer, 3kg of crystalline polypropylene with weight average molecular weight of 40,000, 180g of maleic anhydride, 12g of di-tert-butyl peroxide and 3kg of xylene were placed, and, after nitrogen replacement in flask was performed for about 10 minutes, the reaction was conducted for 3 hours while stirring in an oil bath kept constantly at 140°C. After completion

of the reaction, the reaction liquor was put in a large quantity of methyl ethyl ketone to deposit the resin. This resin was further washed with methyl ethyl ketone to remove the unreacted maleic anhydride.

Next, 2kg of this product were put in a glass-lined reactor,30L of chloroform were added, and, after dissolved sufficiently at a temperature of 110°C under a pressure of 3kg/$cm^{2,}$ chlorine gas was blown-in from the bottom of reactor while irradiating ultraviolet rays to conduct the chlorinating reaction. After reacted to target degree of chlorination, chloroform being a reaction solvent was concentrated with evaporator under reduced pressure, and tert-butylphenyl glycidyl ether was added in amount of 4% by weight based on solids as a stabilizer. Then the solvent in this concentrated liquor was removed completely with extruder with vent port and the resulting product was pelletized with water-cooling type pelletizer to obtain solid material of maleic anhydride-modified chlorinated polypropylene with amount of maleic anhydride of 3.2% by weight and chlorine content of 20% by weight.

[Packages 1 through 6]

With combinations shown in Table 1, each 50g of solid materials of maleic anhydride-modified chlorinated polypropylenes obtained in producing examples were packed and tightly closed by heat seal to fabricate packages. The physical properties of composite films are shown in Table 2.

(Table 1)

Table 1

| | Solid material of maleicanhydride-modified chlorinated polypropylene | Composite film |
|---|---|---|
| Package 1 | Producing example 1 | I |
| Package 2 | Producing example 2 | I |
| Package 3 | Producing example 1 | II |
| Package 4 | Producing example 2 | II |
| Package 5 | Producing example 1 | III |
| Package 6 | Producing example 2 | III |

(Table 2)

Table 2

| Film | Constitution of substrate film | Thickness of substrate film (μm) | Water vapor transmission rate ($g/m^2 \cdot 24hr$) |
|---|---|---|---|
| I | PET/Al foil/PA/PE/LLDPE | 12/9/25/20/60 | 1.3 |
| II | LLDPE/HDPE/LLDPE | 12/15/100 | 2.0 |
| III | Al-metallized PET/PA/LLDPE | 12/15/100 | 1.9 |

Film I: Trade name AL Pouch, From Okura Industrial Co., Ltd.
Film II: Trade name Schulpen, From Ube Film, Ltd.
Film III: Trade name Takenoko Bag, From Okura Industrial Co., Ltd.

[Example 1: Determination of degree of ring opening]

Packages 1 through 6 were placed statically in a desiccator with water on the bottom and cap of desiccator was closed completely and tightly, which was allowed to stand for 1 week in an atmosphere of 40°C. At this time, the relative humidity in desiccator was about 90%RH. After a week, said packages were taken out from desiccator, each of the solid materials of maleic anhydride-modified chlorinated polypropylenes was dissolved into toluene and coated on a KBr plate. After toluene was removed sufficiently, infrared spectrum was taken with infrared spectrophotometer.

Besides, the infrared spectra of solid materials before placing in desiccator were made to be blanks.

The degree of ring opening of maleic anhydride was determined from following formula. Namely, if measuring the absorbances of absorption originating from maleic anhydride ($1780cm^{-1}$) and absorption originating from $-CH_3$ ($1460cm^{-1}$), then the relative amount of maleic anhydride can be seen from the ratio (FGI) thereof. Using this FGI, the degree of ring opening was calculated from the reduction rate against blank. It is shown that the higher the numerical value of degree of ring opening, the more the advance in ring opening of maleic anhydride. The measuring results are shown in Table 3.

(Formula 1)

$$\text{Degree of ring opening of maleic anhydride (\%)} = (FGI_{blank} - FGI)/FGI_{blank} \times 100$$

FGI = (Absorbance at $1780cm^{-1}$)/(Absorbance at $1460cm^{-1}$)

(Table 3)

Table 3

| Degree of ring opening of maleic anhydride in solid material | |
|---|---|
| | Degree of ring opening (%) |
| Blank 1<br>(Solid material in Producing example 1) | 0 |
| Package 1 | 7.6 |
| Package 3 | 54.7 |
| Package 5 | 52.9 |
| Blank 2<br>(Solid material in Producing example 2) | 0 |
| Package 2 | 12.5 |
| Package 4 | 62.5 |
| Package 6 | 60.0 |

From Table 3, maleic anhydride in solid materials of maleic anhydride-modified chlorinated polypropylenes in packages 1 and 2 packed with composite film I with water vapor transmission rate of $1.5g/m^2 \cdot 24hr$ or lower causes little ring opening, whereas, with packages 3 through 6 used composite films II and III with water vapor transmission rate exceeding $1.5g/m^2 \cdot 24hr$, the greater part of maleic anhydride in said solid materials causes the ring opening reaction with moisture, resulting in transmutation.

[Example 2: Measurement of viscosity]

After packages 1, 3 and 5 were placed statically for 3 months and 6 months in an atmosphere of temperature of 20°C and humidity of 65%, each interior solid material of maleic anhydride-modified chlorinated polypropylene was dissolved into a mixed solvent of toluene/cyclohexane=70/30 (wt./wt.), and, after concentration was adjusted to 20% by weight, the solution viscosity was measured using Brookfield type viscometer. Besides, the solution viscosity of said solid material before placing statically was measured similarly, which was made to be blank. The measuring results are shown in Table 4.

(Table 4)

Table 4

| | Solution viscosity (mPa · s/25°C) | |
|---|---|---|
| | After placing statically for 3 months | After placing statically for 6 months |
| Package 1 | 68 | 73 |
| Package 3 | 230 | 970 |
| Package 5 | 220 | 940 |
| Blank | 66 (before placing statically) | |

From Table 4, the solution viscosity of solid material of maleic anhydride-modified chlorinated polypropylene in package 1 packed with composite film I with water vapor transmission rate of $1.5g/m^2 \cdot 24hr$ or lower changes little even after preserved for a long time, whereas, with packages 3 and 5 used composite films II and III with water vapor transmission rate exceeding $1.5g/m^2 \cdot 24hr$, the solution viscosities increase remark-ably after preserved for a long term.

[Example 3: Test of gasohol resistance]

Packages 2, 4 and 6 were allowed to stand in a desiccator for a week similarly to Example 1 and each interior solid material of maleic anhydride-modified chlorinated polypropylene was dissolved into toluene at a concentration of 10% by weight to fabricate a primer. Next, this primer was spray painted or coated with Meyer bar onto a polypropylene plate washed with water, so as the film thickness to become 10μm. After several minutes, a two-component cure type urethane paint was spray painted so as to become 30 to 40μm, dried for about 15 minutes at room temperature, and then dried forcedly for 30 minutes at 80°C. After allowed to stand statically for 3 days at room temperature, test of gasohol resistance was performed.

The test of gasohol resistance was made by soaking the painted plate with both ends cut into a mixed gasoline of regular gasoline:ethanol=9:1 and by judging the time until the coated surface peeled off by around 2mm from cut ends. Besides, the primer used the solid material before allowed to stand was made to be blank. The measuring results are shown in Table 5.

(Table 5)

Table 5

| Test results of Gasohol resistance | |
|---|---|
| | Gasohol resistance (min)* |
| Blank | >60 |
| Package 2 | >60 |
| Package 4 | 25 |
| Package 6 | 28 |

Gasohol resistance (min)* Passing is 60 or more.

From Table 5, the gasohol resistance of solid material of maleic anhydride-modified chlorinated polypropylene in package 2 packed with composite film I with water vapor transmission rate of $1.5g/m^2 \cdot 24hr$ or lower changes little compared with blank, whereas, with packages 4 and 6 used composite films II and III with water vapor transmission rate exceeding $1.5g/m^2 \cdot 24hr$, the gasohol resistances after allowed to stand for a week decrease remarkably.

Utilizability in the industry

In accordance with the invention, the problem of the changes in physical properties of solid material of carboxylic anhydride-modified chlorinated polyolefin on preserving for a long term, which was problematic so far, could be solved.

Namely, the invention exerts an effect that the ring opening of carboxylic anhydride in said solid material due to water is suppressed, thus making it possible to suppress increased viscosity and decreased gasohol resistance.

Since the quality of said solid material can be maintained stably for a long term according to the invention, it is very useful on exporting or keeping for a long term.

## Claims

1. A package of solid material of carboxylic anhydride-modified chlorinated polyolefin, comprising said solid material of carboxylic anhydride-modified chlorinated polyolefin wrapped with a film with the value of water vapor transmission rate measured according to ASTM D895 of $1.5g/m^2 \cdot 24hr$ or lower.

2. A method of preserving solid material of carboxylic anhydride-modified chlorinated polyolefin, **characterized by** wrapping said solid material of carboxylic anhydride-modified chlorinated polyolefin with a film with the value of water vapor transmission rate measured according to ASTM D895 of $1.5g/m^2 \cdot 24hr$ or lower.

**INTERNATIONAL SEARCH REPORT**

International application No.
PCT/JP01/07940

A. CLASSIFICATION OF SUBJECT MATTER
Int.Cl$^7$ B65D 81/24, C08L 23/28

According to International Patent Classification (IPC) or to both national classification and IPC

B. FIELDS SEARCHED

Minimum documentation searched (classification system followed by classification symbols)
Int.Cl$^7$ B65D 67/00-79/02, 81/18-81/30, 81/38, C08L 23/28

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2001 |
| Kokai Jitsuyo Shinan Koho | 1972-2001 | Jitsuyo Shinan Toroku Koho | 1996-2001 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 7-10177 A (The Yokohama Rubber Co., Ltd.), 13 January, 1995 (13.01.95), page 2, left column, line 45 to right column, line 11; page 2, right column, lines 36 to 41 (Family: none) | 1,2 |
| Y | JP 9-136867 A (Showa Denko K.K.), 27 May, 1997 (27.05.97), page 2, right column, lines 10 to 43 (Family: none) | 1,2 |
| Y | JP 10-231402 A (Nippon Paper Industries Co., Ltd.), 02 September, 1998 (02.09.98), page 2, right column, lines 39 to 40 (Family: none) | 1,2 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>16 November, 2001 (16.11.01) | Date of mailing of the international search report<br>18 December, 2001 (18.12.01) |
| Name and mailing address of the ISA/<br>Japanese Patent Office | Authorized officer |
| Facsimile No. | Telephone No. |

Form PCT/ISA/210 (second sheet) (July 1992)